# EUROPEAN PATENT SPECIFICATION

(11) **EP 1 976 815 B1**
(45) Date of publication and mention of the grant of the patent: **27.06.2012**
(21) Application number: 07717816.8
(22) Date of filing: 11.01.2007
(51) Int. Cl.: C07C 27/10, C10L 1/02, C25B 1/02, C25B 3/04, C25B 9/18

(54) **SYNTHESIS OF BIODIESEL USING ALKALI ION CONDUCTIVE CERAMIC MEMBRANES**
BIODIESELSYNTHESE UNTER VERWENDUNG LEITENDER KERAMIKMEMBRANEN
SYNTHESE DE BIODIESEL AU MOYEN DE MEMBRANES CERAMIQUES CONDUCTRICES D'IONS DE METAL ALCALIN

(30) Priority: 11.01.2006 US 758246 P
(43) Date of publication of application: 08.10.2008
(73) Proprietor: Ceramatec, Inc., Salt Lake City, UT 84119 (US)
(72) Inventor: BALAGOPAL, Shekar, Sandy, Utah 84093 (US); JOSHI, Ashok, Salt Lake City, UT 84124 (US); PENDELTON, Justin, Salt Lake City, Utah 84124 (US)
(74) Representative: Harrison Goddard Foote
(86) International application number: PCT/US2007/000968
(87) International publication number: WO 2007/082092

(56) References cited:
- WO-A2-2005/059205
- US-A1- 2005 011 112
- US-A1- 2005 204 612
- US-A1- 2005 262 760
- GUAN G ET AL: "Synthesis of biodiesel fuel using an electrolysis method", CHEMICAL ENGINEERING JOURNAL, ELSEVIER SEQUOIA, LAUSANNE, CH, vol. 153, no. 1-3, 1 November 2009 (2009-11-01), pages 159-163, XP026378568, ISSN: 1385-8947 [retrieved on 2009-06-13]

## Description

### FIELD OF THE INVENTION

The present invention relates in general to the chemical synthesis of biodiesel using electrolytic cells that contain alkali ion conductive ceramic membranes. The invention incorporates the process of separating alkali ions from glycerine byproducts of biodiesel production.

### BACKGROUND OF THE INVENTION

Biodiesel is an alternative fuel source to diesel, JP-8, and standard gasoline that is growing in popularity and market penetration in the United States and worldwide. Current methods of making biodiesel are outlined in the publication *Biodiesel Production Technology,* NREL, July 2004 (NREL1SR-510-36244). Biodiesel is defined as a fuel comprised of mono-alkyl esters of long chain fatty acids derived from triglycerides. A "mono-alkyl ester" is the product of the reaction of a straight chain alcohol, such as methanol or ethanol, with a triglyceride to form glycerine (also known as glycerin or glycerol) and the esters of long chain fatty acids. The triglycerides are commonly obtained from vegetable oils and animal fats of various origins. As used throughout this specification the term "triglycerides" may be used interchangeably with fats or fatty acids, vegetable oils and animal fats. Biodiesel has a general formula R'OOCR, where R' is a straight chain lower alkyl and R is a C₁₄ to C₂₄ hydrocarbon chain.

One method of making biodiesel involves the reaction of triglycerides with methanol and with a hydroxide salt catalyst according to reaction (1) below. 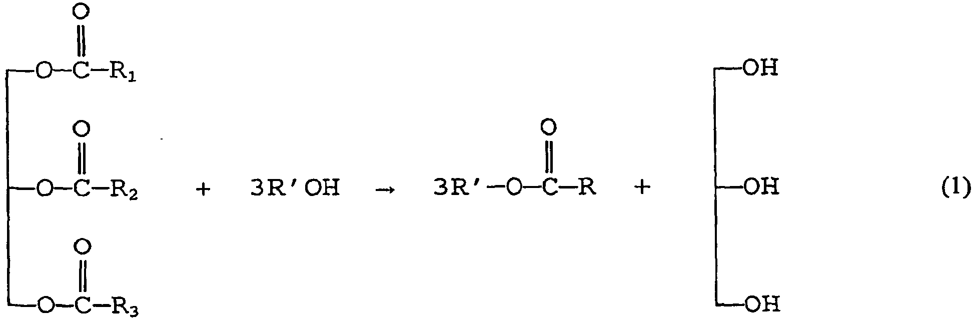 Where R represents R₁, R₂, or R₃ which may be the same or different C₁₄ to C₂₄ hydrocarbon chain, and R' is an unbranched, straight chain lower alkyl, such as methyl or ethyl.

The process of reaction (1) uses NaOH/KOH as a catalyst for reaction between triglycerides and alcohol to form a two phase soapy glycerol based ester with biodiesel. The two phase mixture is washed with water to separate biodiesel. This process is cumbersome, complex, inefficient, and may elevate the cost of biodiesel.

Biodiesel may also be manufactured by reaction of triglycerides with an alkali alkoxide, such as alkali methoxide or alkali ethoxide, according to reaction (2) below. 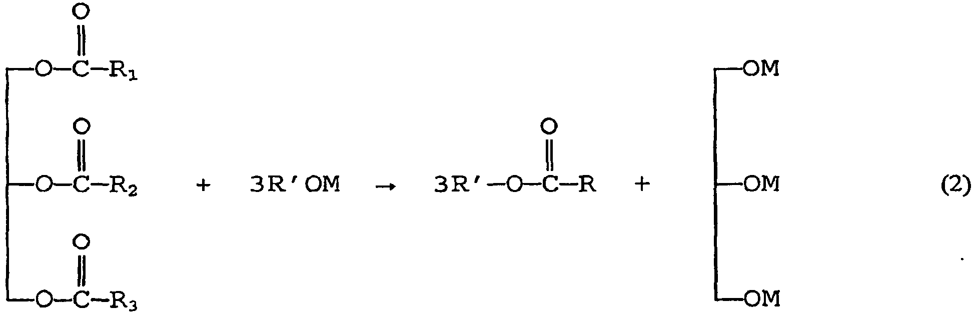 Where R represents R₁, R₂, or R₃ which may be the same or different C₁₄ to C₂₄ hydrocarbon chain, and R' is an unbranched, straight chain lower alkyl, such as methyl or ethyl.

Industrial processes of manufacturing alkali alkoxides require the metallic alkali metal, such as sodium, or a mercury amalgam. Such processes have significant safety, sodium handling infrastructure, cost issues and/or often result in a product that is contaminated by mercury.

Thus, it would be an improvement in the art to provide improved apparatus and methods for synthesizing biodiesel designed to address these and other considerations in order to provide potentially more economical production pathways. It would be an improvement in the art to provide apparatus and methods of making biodiesel that eliminate or limit the use of alkali hydroxides or alkali alkoxides as catalysts. It would also be an improvement in the art to combine biodiesel synthesis with the separation of alkali ions, such as sodium and potassium ions, from glycerine byproducts. Such processes and apparatus are provided herein.

US 2005/0011112 describes an integrated process for producing biodiesel from oleaginous seeds, preferably castor bean seeds.

US2005/0204612 describes a method for the continuous production of biodiesel from biogenic fat- or oil-containing starting mixtures with a high content of free fatty acids as well as a device for producing biodiesel.

### BRIEF SUMMARY OF THE INVENTION

The present invention provides methods and apparatus for synthesizing biodiesel using alkali alkoxide generated on-site using an electrochemical process. Methods of separating alkali ions from glycerine byproducts and biodiesel are also proposed. These methods are enabled by the use of alkali ion conductive ceramic membranes in electrolytic cells.

In a method and apparatus for producing biodiesel within the scope of the present invention, two electrolytic cells are utilized. A first electrolytic cell includes a first alkali ion conductive ceramic membrane configured to selectively transport alkali ions. The ceramic membrane separates the first electrolytic cell into a first anolyte compartment configured with an electrochemically active first anode and a first catholyte compartment configured with an electrochemically active first cathode. An alkali hydroxide solution is introduced into the first anolyte compartment. An initial starting solution of alkali alcoholate is added to enhance and maintain conductivity of the solution in the catholyte compartment. Alcohol and triglycerides are introduced into the first catholyte compartment. The alcohol may be a straight chain, lower alkyl, C₁ to C₆ that may be substituted or unsubstituted. The alcohol may contain more than one hydroxyl moiety. Examples of typical alcohols that may be used include, but are not limited to, methanol, ethanol, propanol, isopropanol, hexanol, ethylene glycol, and propylene glycol. In one embodiment, the triglycerides are obtained from vegetable oils or animal fats of various origins.

When an electric current is applied to the first electrolytic cell, hydroxide anions are oxidized at the first anode to form oxygen gas and water. The influence of the electric potential causes alkali to pass through the first alkali ion conductive ceramic membrane from the first anolyte compartment to the first catholyte compartment. Alcohol, in the presence of alkali ions, is reduced in the first catholyte compartment to form an alkali alkoxide and hydrogen gas. The alkali alkoxide reacts with the triglycerides to form a mixture of biodiesel and alkali salts of glycerine.

A second electrolytic cell includes a second alkali ion conductive ceramic membrane configured to selectively transport alkali ions. The ceramic membrane separates the second electrolytic cell into a second anolyte compartment configured with an electrochemically active second anode and a second catholyte compartment configured with an electrochemically active second cathode.

The mixture of biodiesel and alkali salts of glycerine may be removed from the first catholyte compartment and introduced into the second anolyte compartment. Hydrogen gas is introduced into the second anolyte compartment. Water is introduced into the second catholyte compartment.

When an electric current is applied to the second electrolytic cell, hydrogen gas is oxidized at the second anode to form hydrogen ions. This reaction may be facilitated by the use of suitable catalyst compounds associated with the second anode. The hydrogen ions may then react with the alkali salts of glycerine to form clean glycerine. The influence of the electric potential causes free alkali ions to pass through the second alkali ion conductive ceramic membrane from the second anolyte compartment to the second catholyte compartment. Water is decomposed in the presence of alkali ions in the second catholyte compartment to form alkali hydroxide solution and hydrogen gas. Biodiesel and clean glycerine may be removed from the second anolyte compartment. They may be easily separated in a settling tank, if desired.

To increase the efficiency of the apparatus and method, hydrogen gas produced in the first catholyte compartment may be introduced into the second anolyte compartment. Similarly, hydrogen gas produced in the second catholyte compartment may be introduced into the second anolyte compartment.

The alkali hydroxide solution produced in the second catholyte compartment may be removed and introduced into the first anolyte compartment. Water produced in the first anolyte compartment, along with the alkali hydroxide, is removed and introduced into the second catholyte compartment.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussion of the features and advantages, and similar language, throughout this specification may, but do not necessarily, refer to the same embodiment, but may refer to every embodiment.

Furthermore, the described features, advantages, and characteristics of the invention may be combined in any suitable manner in one or more embodiments. One skilled in the relevant art will recognize that the invention may be practiced without one or more of the specific features or advantages of a particular embodiment. In other instances, additional features and advantages may be recognized in certain embodiments that may not be present in all embodiments of the invention.

These features and advantages of the present invention will become more fully apparent from the following description and appended claims, or may be learned by the practice of the invention as set forth hereinafter.

### BRIEF DESCRIPTION OF THE SEVERAL VIEWS OF THE DRAWINGS

In order that the manner in which the above-recited and other features and advantages of the invention are obtained will be readily understood, a more particular description of the invention briefly described above will be rendered by reference to specific embodiments thereof that are illustrated in the appended drawings. Understanding that these drawings depict only typical embodiments of the invention and are not therefore to be considered to be limiting of its scope, the invention will be described and explained with additional specificity and detail through the use of the accompanying drawings in which:

Figure 1 provides a general schematic view for an electrolytic apparatus and process for producing biodiesel within the scope of the present invention;

Figure 2 provides a schematic view of a first electrolytic cell used in the apparatus for producing biodiesel of Figure 1; and

Figure 3 provides a schematic view of a second electrolytic cell in the apparatus for producing biodiesel of Figure 1.

### DETAILED DESCRIPTION OF THE INVENTION

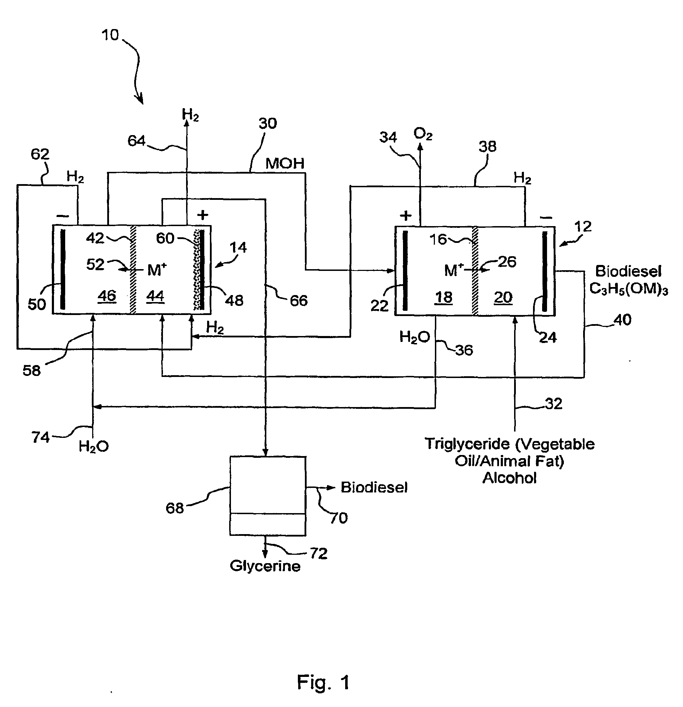

The present embodiments of the present invention will be best understood by reference to the drawings, wherein like parts are designated by like numerals throughout. It will be readily understood that the components of the present invention, as generally described and illustrated in the figures herein, could be arranged and designed in a wide variety of different configurations. Thus, the following more detailed description of the embodiments of the methods and cells of the present invention, as represented in Figures 1 through 3, is not intended to limit the scope of the invention, as claimed, but is merely representative of present embodiments of the invention.

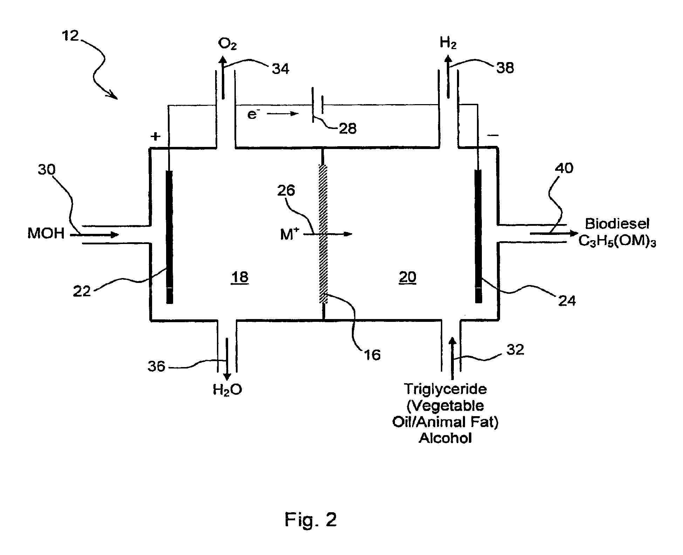

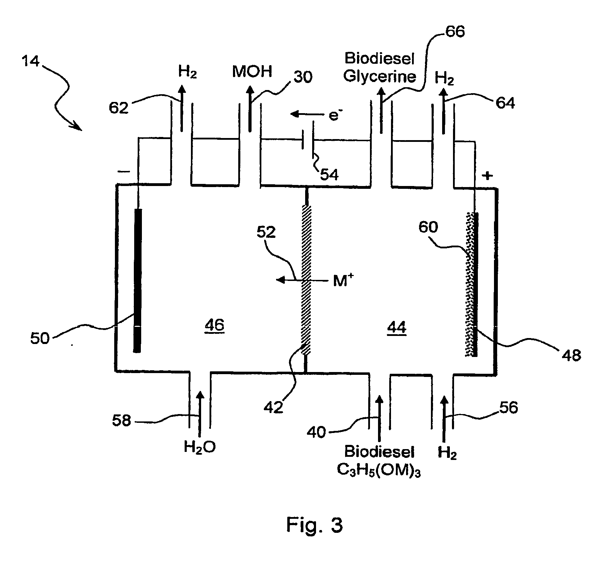

Figure 1 illustrates a general schematic view for an electrolytic apparatus and process for producing biodiesel 10 within the scope of the present invention. The apparatus and process for producing biodiesel 10 includes a first electrolytic cell 12 and a second electrolytic cell 14. The first electrolytic cell 12 is shown in greater detail in Fig. 2, while the second electrolytic cell 14 is shown in greater detail in Fig. 3.

The first electrolytic cell 12 uses an alkali ion conductive ceramic membrane 16 that divides the first electrochemical cell 12 into two compartments: a first anolyte compartment 18 and a first catholyte compartment 20. An electrochemically active first anode 22 is housed in the first anolyte compartment 18 where oxidation reactions take place, and an electrochemically active first cathode 24 is housed in the first catholyte compartment 20 where reduction reactions take place. The alkali ion conductive ceramic membrane 16 selectively transfers alkali ions (M⁺) 26 from the first anolyte compartment 18 to the first catholyte compartment 20 under the influence of an electrical potential 28 (Fig. 2) while preventing water transportation from either compartment to the other side.

The first electrolytic cell 12 is operated by feeding an aqueous alkali hydroxide (MOH) solution 30 into the first anolyte compartment 18. The alkali hydroxide solution 30 may come from any source, including alkali hydroxide generated in other parts of the apparatus and process for producing biodiesel 10. In one embodiment, sodium hydroxide is the alkali hydroxide, but other alkali hydroxides, including but not limited to, lithium hydroxide and potassium hydroxide, may be used.

A triglyceride and alcohol feed 32 is fed into the first catholyte compartment 20. The alcohol may be a straight chain, lower alkyl alcohol, C₁ to C₆, that may be substituted or unsubstituted. The alcohol may contain more than one hydroxyl moiety. Examples of typical alcohols that may be used include, but are not limited to, methanol, ethanol, propanol, isopropanol, hexanol, butanol, ethylene glycol, and propylene glycol. For convenience, the following discussion will refer to methanol as the alcohol, it being understood that methanol is a non-limiting example of an alcohol that may be used to prepare biodiesel within the scope of the present invention. Persons skilled in the art will appreciate that other alcohols besides methanol may be used in the in the apparatus and method for preparing biodiesel discussed herein.

During operation, the source of alkali ions may be provided by alkali ions 26 transporting across the alkali ion conductive ceramic membrane 16 from the first anolyte compartment 18 to the first catholyte compartment 20. The triglycerides may commonly be obtained from vegetable oils and animal fats of various origins. The triglycerides will typically have the formula: 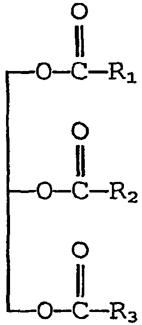 where R₁, R₂, and R₃ may be the same or different C₁₄ to C₂₄ hydrocarbon chain. The chemical formula for triglycerides may also be written as [C₃H₅O₃] [OCR]₃, where R represents the same or different C₁₄ to C₂₄ hydrocarbon chain.

The first anode 22 may be fabricated of various materials, including those discussed below. In one embodiment, the first anode 22 is fabricated of titanium coated with advanced metal oxides. The first cathode 24 may also be fabricated of various materials, including those discussed below. In one embodiment, the first cathode 24 is fabricated of nickel/stainless steel.

Under the influence of electric potential 28, electrochemical reactions take place at the first anode 22 and first cathode 24. Oxidation of hydroxide ions to form oxygen gas 34 and water 36 occurs at the first anode 22, and reduction of alcohol to form hydrogen gas 38 and methoxide ions (CH₃O⁻) occurs at the first cathode 24. The methoxide ions react with available alkali ions to form alkali methoxide (CH₃OM). The alkali methoxide reacts with the triglyceride according to reaction (2) above to form a mixture 40 of biodiesel (CH₃OOCR) and alkali salts of glycerine (C₃H₅(OM)₃).

The chemical reactions in the first electrolytic cell 12 are summarized below:
At the first anode/anolyte compartment:

   12MOH → 12M⁺ + 120H⁻

   12OH⁻ → 3O₂ + 12e⁻ + 6H₂O
At the first cathode/catholyte compartment:

   12CH₃OH + 12e⁻ → 12CH₃O⁻ + 6H₂

   12CH₃O⁻ + 12M⁺ → 12CH₃OM

   4[C₃H₅O₃] [OCR]₃ + 12CH₃OM → 12CH₃OOCR + 4C₃H₅(OM)₃
Overall reaction of the first electrolytic cell 12:

   4[C₃H₅O₃] [OCR]₃ + 12CH₃OH + 12MOH →

   3O₂ + 6H₂ + 6H₂O + 12CH₃OOCR + 4C₃H₅(OM)₃

It will be appreciated that alkali methoxide is produced in one of the reactions of the first catholyte compartment 20. The process used in the first electrolytic cell 12 utilizes aqueous alkali hydroxide and methanol to make the alkali methoxide solution. It is a safer and cleaner process compared to the existing processes to make alkali methoxide that use either metallic alkali metal and methanol or mercury-amalgam and methanol to make the alkali methoxide.

Alkali metals, such as sodium, are highly reactive, pyrophoric, and often expensive chemicals. Their storage and delivery require extensive and elaborate safety and control measures. Mercury-amalgam processes are prone to leave trace levels of mercury in the alkali methoxide produced, and further require environmental protective measures. Since the disclosed process avoids use of alkali metal and of mercury amalgam, it poses less risk, is less expensive, and is more environmentally benign.

The second electrolytic cell 14 uses an alkali ion conductive ceramic membrane 42 that divides the second electrochemical cell 14 into two compartments: a second anolyte compartment 44 and a second catholyte compartment 46. An electrochemically active second anode 48 is housed in the second anolyte compartment 44 where oxidation reactions take place, and an electrochemically active second cathode 50 is housed in the second catholyte compartment 46 where reduction reactions take place. The alkali ion conductive ceramic membrane 42 selectively transfers alkali ions (M⁺) 52 from the second anolyte compartment 44 to the second catholyte compartment 46 under the influence of an electrical potential 54 (Fig. 3) while preventing water transportation from either compartment to the other side. In one embodiment, the membrane 42 may be a ceramic oxide with a nano porosity and the alkali ions may diffuse across the membrane 42.

The second electrolytic cell 14 is operated by feeding the mixture 40 of biodiesel and alkali salts of glycerine produced in the first catholyte compartment 20 into the second anolyte compartment 44. Hydrogen gas 56 is also introduced into the second anolyte compartment 44.

Water 58 is fed into the second catholyte compartment 46. During operation, the source of alkali ions in the second catholyte compartment may be provided by alkali ions 52 transporting across the alkali ion conductive ceramic membrane 42 from the second anolyte compartment 44 to the second catholyte compartment 46.

The second anode 48 may be fabricated of various materials, including those discussed below. In one embodiment, the second anode 48 is fabricated of titanium coated with advanced metal oxides. The second anode 48 may include a catalyst 60 to facilitate oxidation of hydrogen gas to form hydrogen ions. The second cathode 50 may also be fabricated of various materials, including those discussed below. In one embodiment, the second cathode 50 is fabricated of nickel/stainless steel.

Under the influence of electric potential 54, electrochemical reactions take place at the second anode 48 and second cathode 50. Oxidation of hydrogen gas to form hydrogen ions occurs at the second anode 48. The hydrogen ions exchange with the alkali salts of glycerine to form glycerine, also known as glycerin and glycerol. Reduction of water to form hydrogen gas 62 and hydroxide ions occurs at the second cathode 50. The hydroxide ions react with available alkali ions to form an alkali hydroxide (MOH) solution. The alkali hydroxide solution is removed and transported to the first electrolytic cell 12 as alkali hydroxide solution 30. The hydrogen gas 62 produced in the second catholyte compartment 46 and hydrogen gas 38 produced in the first anolyte compartment 20 may be combined to provide the hydrogen gas 56 that is introduced into the second anolyte compartment 44.

The chemical reactions in the second electrolytic cell 12 are summarized below:
At the second anode/anolyte compartment:

   6H₂ → 12e⁻ + 12H⁺

   4C₃H₅(OM)₃ + 12H⁺ → 4C₃H₅(OH)₃ + 12 M⁺
At the second cathode/catholyte compartment:

   12H₂O + 12e⁻ → 12OH⁻ + 6H₂

   120H⁻ + 12M⁺ → 12MOH
Overall reaction of the second electrolytic cell 14:

   12H₂O + 4C₃H₅(OM)₃ → 12MOH + 4C₃H₅(OH)₃

Unreacted or excess hydrogen gas 64 may be collected and removed from the second anolyte compartment 44. The hydrogen gas 64 may provide fuel to an alternative energy generating process, such as a PEM fuel cell or other device known to one of ordinary skill in the art for energy generation. This may help offset the energy requirements to operate the electrolytic processes. The hydrogen gas 64 may be used for chemical processing operations known to one of ordinary skill in the art.

Biodiesel and glycerine 66 are removed from the second anolyte compartment 44 for further processing or separation. In the embodiment illustrated in Fig. 1, the biodiesel and glycerine 66 are fed to a settling tank 68 where biodiesel 70 may be separated from clean glycerine 72.

The overall, combined chemical reaction of the first and second electrolytic cells 12, 14 of the apparatus and method 10 may be summarized as follows:

6H₂O + 12CH₃OH + 4[C₃H₅O₃] [OCR]₃ → 3O₂ + 6H₂ + 12CH₃OOCR + 4C₃H₅(OH)₃

From the foregoing overall chemical reaction, it will be appreciated that a quantity of water must be input into the apparatus and method, in addition to the methanol and triglycerides. Some of the water requirements are provided by the water 36 produced in the first anolyte compartment 18, but additional water 74 may be required.

The invention may incorporate the process of separating alkali ions from glycerine byproducts of biodiesel production. In this method, the glycerine byproducts, which include alkali salts of glycerine, may be fed into and purified by an electrolytic cell configured similar to the second electrolytic cell 14, and illustrated in Fig. 3. As discussed above in relation to the second electrolytic cell 14, hydrogen gas is oxidized in the anolyte compartment to produce hydrogen ions which replace the alkali metal ions in the glycerine byproducts resulting in clean glycerine. The free alkali ions are transported from the anolyte compartment across the alkali ion conductive ceramic membrane into the catholyte compartment where they combine with hydroxide ions to form an alkali hydroxide solution.

The phrase "substantially impermeable to water," when used in the instant application to refer to a membrane, means that a small amount of water may pass through the membrane, but that the amount that passes through is not of a quantity to diminish the usefulness of the present invention. The phrase "essentially impermeable to water," as used herein in reference to a membrane, means that no water passes through the membrane, or that if water passes through the membrane, its passage is so limited so as to be undetectable by conventional means. The words "substantially" and "essentially" are used similarly as intensifiers in other places within this specification.

Electrode materials useful in the methods and apparatus of the present invention are electrical conductors and are generally substantially stable in the media to which they are exposed. Any suitable electrode material, or combination of electrode materials, known to one of ordinary skill in the art may be used within the scope of the present invention. In some specific embodiments, the anode material may include at least one of the following: dimensionally stable anode (DSA, generally comprising ruthenium oxide-coated-titanium or RuO₂/Ti), nickel, cobalt, nickel tungstate, nickel titanate, platinum and other noble metals, noble metals plated on a substrate such as platinum-plated titanium, metal oxides based on titanium, stainless steel, lead, lead dioxides, graphite, tungsten carbide and titanium diboride. In some specific embodiments, the cathode material may include at least one of the following: nickel, cobalt, platinum, silver, alloys such as titanium carbide with small amounts (in some instances up to about 3 weight %) of nickel, FeAl₃, NiAl₃, stainless steel, perovskite ceramics, and graphite. In some embodiments, the electrodes may be chosen to maximize cost effectiveness by balancing the electrical efficiency of the electrodes against their cost.

The electrode material may be in any suitable form within the scope of the present invention, as would be understood by one of ordinary skill in the art. In some specific embodiments, the form of the electrode materials may include at least one of the following: a dense or porous solid-form, a dense or porous layer plated onto a substrate, a perforated form, an expanded form including a mesh, or any combination thereof.

In some embodiments of the present invention, the electrode materials may be composites of electrode materials with non-electrode materials, where non-electrode materials are poor electrical conductors under the conditions of use. A variety of insulative non-electrode materials are also known in the art, as would be understood by one of ordinary skill in the art. In some specific embodiments, the non-electrode materials may include at least one of the following: ceramic materials, polymers, and/or plastics. These non-electrode materials may also be selected to be stable in the media to which they are intended to be exposed.

Other variations, including variations of electrode material, shape, and in some instances, placement could be made within the scope of the invention by one of ordinary skill in the art.

The alkali ion conductive ceramic membranes 16, 42 utilized in the processes and apparatus of the present invention are alkali cation-conductive, and physically separate the anolyte solution from the catholyte solution (by means of the dense-layer of the ceramic membrane). In one embodiment, the ceramic membranes conduct lithium ions, sodium ions, or potassium ions. It may be advantageous to employ ceramic membranes with low or even negligible electronic conductivity, in order to minimize any galvanic reactions that may occur when an applied potential or current is removed from the cell containing the ceramic membrane. In some embodiments of the present invention it may be advantageous to employ ceramic membranes that are substantially impermeable to at least the solvent components of both the catholyte and anolyte solutions.

In some specific embodiments, the ceramic membrane may include at least one of the following features and use characteristics, as would be understood by one of ordinary skill in the art: a solid form; a high alkali ion conductivity at temperatures below about 100°C; low electronic conductivity; an alkali-ion transfer efficiency (i.e. high transference number) greater than about 90%; a high selectivity for particular alkali cations (e.g. Na⁺) in relation to other alkali or non-alkali cations; stability in solutions of alkali-ion containing salts and chemicals of weak or strong organic or inorganic acids; a density greater than about 95% of theoretical density value; substantially impermeable to water transport; resistant to acid, alkaline, caustic and/or corrosive chemicals.

In some embodiments of the ceramic membrane of the present invention, the ceramic membrane may not be substantially influenced by scaling, fouling or precipitation of species incorporating divalent cations, trivalent cations, and tetravalent cations; or by dissolved solids present in the solutions.

A variety of alkali ion conductive ceramic membranes are known in the art and would be suitable for constructing the ceramic membranes used in the electrolytic cells of the present invention, as would be understood by one of ordinary skill in the art. In an embodiment of the present invention, an alkali ion conductive ceramic membrane may be a solid electrolyte material that is an electronic insulator and an ionic conductor. In many embodiments, the alkali ion conductive ceramic membranes are substantially stable in the media to which they are exposed. In some embodiments of the alkali ion conductive ceramic membranes of the present invention, the alkali ions conducted through the alkali ion conductive ceramic membranes may be lithium ions, sodium ions, or potassium ions. Other suitable materials and suitable alkali ions are known to one of ordinary skill in the art and would be suitable for practice of the present invention. In some embodiments of the alkali ion conductive ceramic membranes of the present invention, the alkali ion conductive ceramic membranes may have a sodium ion conductivity ranging from about 1x10⁻⁴ S/cm to about 1 x 10⁻¹ S/cm measured from ambient temperature to about 85°C, and a sodium transfer efficiency greater than about 90%.

The alkali ion conductive ceramic materials are configured to selectively transport alkali ions. They may be a specific alkali ion conductor. For example, the alkali ion conductive ceramic membrane may be a solid MSICON (Metal Super Ion CONducting) material, where M is Na, K, or Li. The alkali ion conductive ceramic membrane may comprise a material having the formula M₁₊ₓM¹₂SiₓP₃₋ₓO₁₂ where 0≤x≤3, where M is selected from the group consisting of Li, Na, K, or mixture thereof, and where M¹ is selected from the group consisting of Zr, Ge, Ti, Sn, or Hf, or mixtures thereof; materials of general formula Na_{1+z}L_{z}Zr_{2-z}P₃O₁₂ where 0≤z≤2.0, and where L is selected from the group consisting of Cr, Yb, Er, Dy, Sc, Fe, In, or Y, or mixtures thereof; materials of general formula M^{II}₅RESi₄O₁₂, where M^{II} may be Li, Na, or any mixture thereof, and where RE is Y or any rare earth element.

In some specific embodiments, the MSICON materials are selective for sodium, referred to herein as NaSICON (Sodium Super Ion CONducting) type materials. The NaSICON materials may include at least one of the following: materials of general formula Na₅RESi₄O₁₂ and non-stoichiometric sodium-deficient materials of general formula (Na₅RESi₄O₁₂)_{1-δ}(RE₂O₃.2SiO₂)_{δ}, where RE is Nd, Dy, or Sm, or any mixture thereof and where δ is the measure of deviation from stoichiometry, as disclosed in United States Patent No. 5,580,430, and as explicitly incorporated herein by this reference in its entirety. In some specific embodiments, the NaSICON-type materials may include at least one of the following: non-stoichiometric materials, zirconium-deficient (or sodium rich) materials of general formula Na₁₊ₓZr_{2-x/3}SiₓP₃₋ₓO_{12-2x/3} where 1.55≤x≤3. In some specific embodiments, the NaSICON-type materials may include at least one of the following: non-stoichiometric materials, sodium-deficient materials of general formula Na₁₊ₓ(A_{y}Zr_{2-y})(Si₂P_{3-z})O_{12-δ} where A is selected from the group consisting of Yb, Er, Dy, Sc, In, or Y, or mixtures thereof, 1.8≤x≤2.6, 0≤y≤0.2, x<z, and δ is selected to maintain charge neutrality. In some specific embodiments, the NaSICON-type materials may include sodium-deficient materials of formula Na₃.₁Zr₂Si_{2.3}P_{0.7}O_{12-δ}.

Other exemplary NaSICON-type materials are described by H. Y-P. Hong in "Crystal structures and crystal chemistry in the system Na1+xZr2SixP3-xO12", Materials Research Bulletin, Vol. 11, pp. 173-182, 1976; J. B. Goodenough et al., in "Fast Na+-ion transport skeleton structures", Materials Research Bulletin, Vol. 11, pp. 203-220, 1976; J. J. Bentzen et al., in "The preparation and characterization of dense, highly conductive Na5GdSi4O12 nasicon (NGS)", Materials Research Bulletin, Vol. 15, pp. 1737-1745, 1980; C. Delmas et al., in "Crystal chemistry of the Na1+xZr2-xLx(PO4)3 (L = Cr, In, Yb) solid solutions", Materials Research Bulletin, Vol. 16, pp. 285-290, 1981; V. von Alpen et al., in "Compositional dependence of the electrochemical and structural parameters in the NASICON system (Na1+xSixZr2P3O12)", Solid State Ionics, Vol. 3/4, pp. 215-218, 1981; S. Fujitsu et al., in "Conduction paths in sintered ionic conductive material Na1+xYxZr2-x(PO4)3", Materials Research Bulletin, Vol. 16, pp. 1299-1309, 1981; Y. Saito et al., in "Ionic conductivity of NASICON-type conductors Na1.5M0.5Zr1.5(PO4)3 (M: Al3+, Ga3+, Cr3+, Sc3+, Fe3+, In3+, Yb3+, Y3+)", Solid State Ionics, Vol. 58, pp. 327-331, 1992; J. Alamo in "Chemistry and properties of solids with the [NZP] skeleton", Solid State Ionics, Vol. 63-65, pp. 547-561, 1993; K. Shimazu in "Electrical conductivity and Ti4+ ion substitution range in NASICON system", Solid State Ionics, Vol. 79, pp. 106-110, 1995; Y. Miyajima in "Ionic conductivity of NASICON-type Na1+xMxZr2-xP3O12 (M: Yb, Er, Dy)", Solid State Ionics, Vol. 84, pp. 61-64, 1996. These references are incorporated in their entirety herein by this reference.

The alkali ion conductive ceramic membranes may be used or produced for use in the processes and apparatus of the present invention in any suitable form, as would be understood by one of ordinary skill in the art. In some specific embodiments, the form of the ceramic membranes may include at least one of the following: monolithic flat plate geometries, supported structures in flat plate geometries, monolithic tubular geometries, supported structures in tubular geometries, monolithic honeycomb geometries, or supported structures in honeycomb geometries. Supported structures may comprise dense layers of alkali cation-conductive ceramic materials supported on porous supports.

A variety of forms for the porous supports are known in the art and would be suitable for providing the porous supports for ceramic membranes with supported structures, including: ceramic layers sintered to below full density with resultant continuous open porosity, slotted-form layers, perforated-form layers, expanded-form layers including a mesh, or combinations thereof. In some embodiments, the porosity of the porous supports is substantially continuous open-porosity so that the liquid solutions on either side of the ceramic membrane may be in intimate contact with a large area of the dense-layers of alkali cation-conductive ceramic materials, and in some, the continuous open-porosity ranges from about 30 volume% to about 90 volume%. In some embodiments of the present invention, the porous supports for the supported structures may be present on one side of the dense layer of alkali cation-conductive ceramic material. In some embodiments of the present invention, the porous supports for the supported structures may be present on both sides of the dense layer of alkali cation-conductive ceramic material.

In some specific embodiments, the ceramic membrane may comprise two or more co-joined layers of different alkali ion conductive ceramic materials. Such co₋joined ceramic membrane layers could include solid NaSICON materials joined to other ceramics, such as, but not limited to, beta-alumina. Such layers could be joined to each other using a method such as, but not limited to, co-firing, joining following sintering, etc. Other suitable joining methods are known by one of ordinary skill in the art and are included herein.

A variety of materials for the porous supports are known in the art and would be suitable for providing the porous supports for ceramic membranes with supported-structures, including: electrode materials, NASICON-type materials, β^{I}-alumina, β^{II}-alumina, other cation-conductive materials, and non-conductive materials such as plastics or ceramic materials, metals, and metal alloys. The thickness of the dense layer of alkali cation-conductive ceramic material in monolithic structures is generally from about 0.3mm to about 5mm, and in some instances from about 0.5mm to about 1.5mm. The thickness of the dense layer of alkali cation-conductive ceramic material in supported-structures is generally from about 25µm to about 2mm, and often from about 0.5mm to about 1.5mm. Layers as thin as about 25µm to about 0.5mm are readily producible, as would be understood by one of ordinary skill in the art. In some specific embodiments, the ceramic membranes are structurally supported by the cathode and the anode, each of which is porous. This may dictate characteristics of both the form of the membranes, and/or of the cathode and/or anode. In some specific embodiments, the porous substrate must have similar thermal expansion and good bonding with the membrane as well as good mechanical strength. One of ordinary skill in the art would understand that the number and configuration of the layers used to construct the ceramic membrane as supported-structures could be widely varied within the scope of the invention.

In some embodiments of the ceramic membranes of the present invention, the ceramic membranes may be composites of alkali cation-conductive ceramic materials with non-conductive materials, where the non-conductive materials are poor ionic and electronic electrical conductors under the conditions of use. A variety of insulative non-conductive materials are also known in the art, as would be understood by one of ordinary skill in the art. In some specific embodiments, the non-conductive materials may include at least one of the following: ceramic materials, polymers, and/or plastics that are substantially stable in the media to which they are exposed.

Layered ceramic-polymer composite membranes are also particularly suitable for use as ceramic membranes in the present invention, such as, but not limited to, those disclosed in United States Patent No. 5,290,405, which is incorporated herein in its entirety by this reference. Layered ceramic-polymer composite membranes generally comprise ionic-selective polymers layered on alkali cation-conductive ceramic materials. In some specific embodiments, the alkali cation-conductive ceramic materials of the layered ceramic-polymer composite membranes may include at least one of the following: NaSICON-type materials or beta-alumina. Ion-selective polymer materials have the disadvantage of having poor selectively to sodium ions, yet they demonstrate the advantage of high chemical stability. Therefore, layered ceramic-polymer composite membranes of cation-conductive ceramic materials with chemically stable ionic-selective polymer layers may be suitable for use in the present invention. In some specific embodiments, the types of ion-selective polymer materials which may be used in the layered ceramic-polymer composite structure may include at least one of the following: polyelectrolyte perfluorinated sulfonic polymers, polyelectrolyte carboxylic acid polymers, Nafion™ materials (from DuPont Fluoroproducts, Fayetteville, NC) and polyvinyl chloride (PVC), matrix-based polymers, co-polymers or blockcopolymers.

In some specific embodiments, the polymers for the layered ceramic-polymer composite membranes may include at least one of the following features and use characteristics, as would be understood by one of ordinary skill in the art: high chemical stability; high ionic conductivity; good adhesion to ceramic materials; and/or insensitivity to impurity contamination.

It not necessary for either the cathode or anode to contact the electrolyte in the processes or apparatus of the present invention. Both the catholyte and anolyte are ion-conductive so that from an electrical standpoint the electrodes may be remote from the sodium ion-conductive membrane. In such an event, a thin-film dense ceramic membrane may be deposited on a porous substrate which does not have to be an electrode.

One of ordinary skill in the art would understand that a number of ceramic powder processing methods are known for processing of the alkali cation-conductive ceramic materials such as high temperature solid-state reaction processes, co-precipitation processes, hydrothermal processes, or sol-gel processes. In some embodiments of the present invention it may be advantageous to synthesize the alkali cation-conductive ceramic materials by high temperature solid-state reaction processes. Specifically, for NaSICON-type materials, a mixture of starting precursors such as simple oxides and/or carbonates of the individual components may be mixed at the desired proportions in methanol in polyethylene vessels, and dried at approximately 60°C to evolve the solvent; the dried mixture of starting precursors may be calcined in the range of from about 800°C to about 1200°C dependent on the composition, followed by milling of the calcined powder with media such as stabilized-zirconia or alumina or another media known to one of ordinary skill in the art to achieve the prerequisite particle size distribution. To achieve the prerequisite particle size distribution, the calcined powder may be milled using a technique such as vibratory milling, attrition milling, jet milling, ball milling, or another technique known to one of ordinary skill in the art, using media (as appropriate) such as stabilized-zirconia or alumina or another media known to one of ordinary skill in the art.

One of ordinary skill in the art would understand that a number of polymers are known for processing with ceramic powders such as those set forth above as prerequisite for preparing a green-form. Such polymers include, but are not limited to, polyacrylates, polyvinyl butyral, polyvinyl alcohol, poly(alkylene carbonate), Polyethylene glycols, DURAMAX™ binders (Rohm and Haas Company, Philadelphia, PA), and POLYOX™ Resins (Dow Chemical Company, Midland, MI.).

One of ordinary skill in the art would understand that a number of conventional ceramic fabrication processing methods are known for processing ceramic membranes such as those set forth above in a green-form. Such methods include, but are not limited to, tape casting, calendaring, embossing, punching, laser-cutting, solvent bonding, lamination, heat lamination, extrusion, co-extrusion, centrifugal casting, slip casting, gel casting, die casting, pressing, isostatic pressing, hot isostatic pressing, uniaxial pressing, and sol gel processing. The resulting green form ceramic membrane may then be sintered to form a ceramic membrane using a technique known to one of ordinary skill in the art, such as conventional thermal processing in air, or controlled atmospheres to minimize loss of individual components of the ceramic membranes. In some embodiments of the present invention it may be advantageous to fabricate the ceramic membrane in a green form by die-pressing, optionally followed by isostatic pressing. In other embodiments of the present invention it may potentially be advantageous to fabricate the ceramic membrane as a multi-channel device in a green form using a combination of techniques such as tape casting, punching, laser-cutting, solvent bonding, heat lamination, or other techniques known to one of ordinary skill in the art. Specifically, for NaSICON-type materials, a ceramic membrane in a green-form may be green-formed by pressing in a die, followed by isostatic pressing and then sintering in air in the range of from about 925°C to about 1300°C for up to about 8 hours to make sintered ceramic membrane structures with dense layers of alkali cation-conductive ceramic materials. Standard x-ray diffraction analysis techniques may be performed to identify the crystal structure and phase purity of the alkali cation-conductive ceramic materials in the sintered ceramic membrane.

In some specific embodiments, ceramic membranes for use in the processes and apparatus of the present invention may be fabricated by a vapor deposition method onto a porous support, including at least one of the following methods: physical vapor deposition, chemical vapor deposition, sputtering, thermal spraying, or plasma spraying. The thickness of the ceramic membrane formed by a vapor deposition method onto a porous support is generally from about 1 µm to about 100 µm, but may be varied as is known to one of ordinary skill in the art.

In one embodiment of the processes and apparatus of the present invention, the cell may be operated in a continuous mode. In a continuous mode, the cell is initially filled with anolyte and catholyte solutions and then, during operation, additional solutions are fed into the cell and products, by-products, and/or diluted solutions are removed from the cell without ceasing operation of the cell. The feeding of the reactants anolyte and catholyte solutions may be done continuously or it may be done intermittently, meaning that the flow of a given solution is initiated or stopped according to the need for the solution and/or to maintain desired concentrations of solutions in the cell, without emptying one or both compartments. Similarly, the removal of solutions from the anolyte compartment and the catholyte compartment may also be continuous or intermittent.

Control of the addition and/or removal of solutions from the cell may be done by any suitable means. Such means include manual operation, such as by one or more human operators, and automated operation, such as by using sensors, electronic valves, laboratory robots, etc. operating under computer or analog control. In automated operation, a valve or stopcock may be opened or closed according to a signal received from a computer or electronic controller on the basis of a timer, the output of a sensor, or other means. Examples of automated systems are well known in the art. Some combination of manual and automated operation may also be used. Alternatively, the amount of each solution that is to be added or removed per unit time to maintain a steady state may be experimentally determined for a given cell, and the flow of solutions into and out of the system set accordingly to achieve the steady state flow conditions.

In another embodiment, the system is operated in batch mode. In batch mode, the anolyte and catholyte solutions are fed into the cell and the cell is operated until the desired concentration of product is produced at the anolyte and catholyte. The cell is then emptied, the product collected, and the cell refilled to start the process again. Alternatively, combinations of continuous mode and batch mode production may be used. Also, in either mode, the feeding of solutions may be done using a pre-prepared solution or using components that form the solution in situ.

It should be noted that both continuous and batch mode have dynamic flow of solutions. In continuous mode, the anolyte make up solution is added so the sodium concentration is maintained at a certain concentration or concentration range. In a batch mode, a certain quantity of sodium salt is used and sodium loss in the anolyte due to its transfer through the membrane to the catholyte in not replenished. The operation is stopped when the Na concentration in the anolyte reduces to a certain amount or when the appropriate product concentration is reached in the catholyte.

## Claims

1. A method for producing biodiesel, comprising:
(a) obtaining a first electrolytic cell (12) comprising a first alkali ion conductive ceramic membrane (16) configured to selectively transport alkali ions, the ceramic membrane (16) separating a first anolyte compartment (18) configured with an electrochemically active first anode (22) and a first catholyte compartment (20) configured with an electrochemically active first cathode (24);
(b) introducing an alkali hydroxide solution into the first anolyte compartment (18);
(c) introducing alcohol and a triglyceride into the first catholyte compartment (20);
(d) applying an electric current to the first electrolytic cell (12) thereby:
i. oxidizing hydroxide anions in the first anolyte compartment (18) to form oxygen, gas and water;
ii. causing alkali ions to pass through the alkali ion conductive ceramic membrane (16) from the first anolyte compartment (18) to the first catholyte compartment (20); and
iii. reducing the alcohol in the presence of alkali ions in the first catholyte compartment (20) to form an alkali alkoxide and hydrogen gas; and
iv. reacting the alkali alkoxide and the triglyceride to form a mixture of biodiesel and C₃H₅(OM)₃, wherein M is an alkali metal;
(e) obtaining a second electrolytic cell (14) comprising a second alkali ion conductive ceramic membrane (42) configured to selectively transport alkali ions, the ceramic membrane (42) separating a second anolyte compartment (44) configured with an electrochemically active second anode (48) and a second catholyte compartment (46) configured with an electrochemically active second cathode (50);
(f) removing the mixture of biodiesel and C₃H₅(OM)₃ from the first catholyte compartment (20) and introducing the mixture into the second anolyte compartment (44);
(g) introducing hydrogen gas into the second anolyte compartment (44);
(h) introducing water into the second catholyte compartment (46);
(i) applying an electric current to the second electrolytic cell (14) thereby:
i. oxidizing hydrogen gas in the second anolyte compartment (44) to form hydrogen ions and thereby facilitate the following reaction: C₃H₅(OM)₃ + 3H⁺ - C₃H₅(OH)₃ + 3M⁺;
ii. causing alkali ions (M⁺) to pass through the alkali ion conductive ceramic membrane (42) from the second anolyte compartment (44) to the second catholyte compartment (46); and
iii. decomposing water in the presence of alkali ions in the second catholyte compartment (46) according to the following reaction: M⁺ + H₂O→ e⁻ MOH + ½H₂; and
(j) removing biodiesel and glycerine (C₃H₅(OH)₃) from the second anolyte compartment (44).

2. A method for producing biodiesel according to claim 1, further comprising the step of separating the glycerine and biodiesel.

3. A method for producing biodiesel according to claim 1, wherein the alcohol comprises a straight chain, lower alkyl alcohol, C₁ to C₆, that may contain more than one hydroxyl moiety.

4. A method for producing biodiesel according to claim 1, wherein the alcohol is selected from methanol, ethanol, propanol, isopropanol, hexanol, butanol, ethylene glycol, and propylene glycol, and the alcohol is preferably methanol.

5. A method for producing biodiesel according to claim 1, wherein the triglyceride comprises vegetable oil and/or animal fat.

6. A method for producing biodiesel according to claim 1, wherein hydrogen gas produced in the first catholyte compartment (20) is introduced into the second anolyte compartment (44).

7. A method for producing biodiesel according to claim 1, wherein hydrogen gas produced in the second catholyte compartment (46) is introduced into the second anolyte compartment (44).

8. A method for producing biodiesel according to claim 1, wherein the second anode (48) comprises a catalyst to facilitate oxidation of hydrogen gas into hydrogen ions.

9. A method for producing biodiesel according to claim 1, wherein alkali hydroxide produced in the second catholyte compartment (46) is removed and introduced into the first anolyte compartment (18).

10. A method for producing biodiesel according to claim 1, wherein water produced in the first anolyte compartment (18) is removed and introduced into the second catholyte compartment (46).

11. A method for producing biodiesel according to claim 1, wherein the triglyceride has the general formula [C₃H₅O₃] [OCR]₃, where R is a C₁₄ to C₂₄ hydrocarbon chain.

12. An apparatus for producing biodiesel (10) comprising:
a first electrolytic cell (12) comprising:
a first anolyte compartment (18) comprising an electrochemically active first anode (22) having a source of aqueous alkali hydroxide in which hydroxide ions are oxidized to form oxygen gas and water;
a first catholyte compartment (20) comprising an electrochemically active first cathode (24) separated from the first anolyte compartment (18) by a first alkali ion conductive ceramic membrane (16) configured to selectively transport alkali ions (M⁺) into the first catholyte compartment (20), wherein the first catholyte compartment (20) has a source of alcohol and a triglyceride, in which the alcohol is reduced in the presence of alkali ions to form alkali alkoxide and hydrogen gas and wherein the alkali alkoxide and the triglyceride react to form a mixture of biodiesel and C₃Hₛ(OM)₃, wherein M is an alkali metal;
a second electrolytic cell (14) comprising:
a second anolyte compartment (44) comprising an electrochemically active second anode (48) having a source of hydrogen gas and C₃Hₛ(OM)₃ in which hydrogen gas is oxidized to form hydrogen ions to thereby facilitate the following reaction:
C₃H₅(OM)₃ + 3H⁺ C₃H₅(OH)₃ + 3M⁺;
a second catholyte compartment (46) comprising an electrochemically active second cathode (50) separated from the second anolyte compartment by a second alkali ion conductive ceramic membrane (42) configured to selectively transport alkali ions (M+) into the second catholyte compartment (46), wherein the second catholyte compartment (46) has a source of water, in which the water is decomposed in the presence of alkali ions to form alkali hydroxide and hydrogen gas;
a fluid path for transporting a portion of the biodiesel and C₃H₅(OM)₃ from the first catholyte compartment (20) to the second anolyte compartment (44); and
a fluid path for removing biodiesel and glycerine (C₃H₅(OH)₃) from the second anolyte compartment (44).

13. An apparatus for producing biodiesel (10) according to claim 12, further comprising a settling tank (68) to separate the glycerine and biodiesel.

14. An apparatus for producing biodiesel (10) according to claim 12, further comprising a fluid path for transporting hydrogen gas produced in the first catholyte compartment (20) to the second anolyte compartment (44).

15. An apparatus for producing biodiesel (10) according to claim 12, further comprising a fluid path for transporting hydrogen gas produced in the second catholyte compartment (46) to the second anolyte compartment (44).

16. An apparatus for producing biodiesel (10) according to claim 12, wherein the second anode (48) further comprising a catalyst to facilitate oxidation of hydrogen gas into hydrogen ions.

17. An apparatus for producing biodiesel (10) according to claim 12, further comprising a fluid path for transporting alkali hydroxide produced in the second catholyte compartment (46) to the first anolyte compartment (18).

18. An apparatus for producing biodiesel (10) according to claim 12, further comprising a fluid path for transporting water produced in the first anolyte compartment (18) to the second catholyte compartment (46).

19. An apparatus for producing biodiesel (10) according to claim 12,:
wherein the alcohol is methanol;
wherein the triglyceride comprises vegetable oil;
wherein the second anode (48) comprises a catalyst to facilitate oxidation of hydrogen gas into hydrogen ions;
and wherein the apparatus further comprises:
a settling tank (68) to separate the glycerine and biodiesel;
a fluid path for transporting hydrogen gas produced in the first catholyte compartment (20) or the second catholyte compartment (46) to the second anolyte compartment (44); a fluid path for transporting alkali hydroxide produced in the second catholyte compartment (46) to the first anolyte compartment (18); and
a fluid path for transporting water produced in the first anolyte compartment (18) to the second catholyte compartment (46).

20. A method for converting alkali salts of glycerine into glycerine comprising:
(a) obtaining an electrolytic cell (14) comprising an alkali ion conductive ceramic membrane (42) configured to selectively transport alkali ions, the ceramic membrane (42) separating a anolyte compartment (44) configured with an anode (48) and a catholyte compartment (46) configured with a cathode (50);
(b) introducing C₃H₅(OM)₃ into the anolyte compartment (44);
(c) introducing hydrogen gas into the anolyte compartment (44);
(d) introducing water into the catholyte compartment (46);
(e) applying an electric current to the electrolytic cell thereby:
i. oxidizing hydrogen gas in the anolyte compartment (44) to form hydrogen ions and thereby facilitate the following reaction: C₃H₅(OM)₃ + 3H⁺→ C₃H₅(OH)₃ + 3M⁺;
ii. causing alkali ions (M⁺) to pass through the alkali ion conductive ceramic membrane (42) from the anolyte compartment (44) to the catholyte compartment (46); and
iii. decomposing water in the presence of alkali ions in the catholyte compartment (46) according to the following reaction: M⁺ + H₂O→ e⁻ MOH + ½H₂; and
(f) removing glycerine (C₃H₅(OH)₃) from the anolyte compartment (44).

21. A method for converting alkali salts of glycerine into glycerine according to claim 20, wherein the anode (48) comprises a catalyst to facilitate oxidation of hydrogen gas into hydrogen ions.

## Patentansprüche

1. Verfahren zur Erzeugung von Biodiesel, wobei dieses folgendes umfasst:
(a) das Erhalten einer ersten elektrolytischen Zelle (12), die eine erste Alkaliionen-leitfähige Keramikmembran (16) umfasst, die so konfiguriert ist, dass sie selektiv Alkaliionen transportiert, wobei die Keramikmembran (16) eine erste Anolytkammer (18), die mit einer elektrochemisch aktiven ersten Anode (22) konfiguriert ist, und eine erste Katholytkammer (20), die mit einer elektrochemisch aktiven ersten Kathode (24) konfiguriert ist, voneinander trennt;
(b) das Einführen einer Alkalihyäroxidlösung in die erste Anolytkammer (18);
(c) das Einführen von Alkohol und einem Triglycerid in die erste Katholytkammer (20);
(d) das Anlegen eines elektrischen Stroms an die erste elektrolytische Zelle (12), wodurch:
i) Hydroxidanionen in der ersten Anolytkammer (18) oxidiert werden, so dass Sauerstoff, Gas und Wasser gebildet werden;
ii) bewirkt wird, dass Alkaliionen von der ersten Anolytkammer (18) durch die Alkaliionen-leitfähige Keramikmembran (17) zu der ersten Katholytkammer (20) verlaufen; und
iii) der Alkohol in Gegenwart von Alkaliionen in der ersten Katholytkammer (20) reduziert wird, so dass ein Alkalialkoxid und Wasserstoffgas gebildet werden; und
iv) das Alkalialkoxid und das Triglycerid in Reaktion gebracht werden, um eine Mischung aus Biodiesel und C₃H₅(OM)₃ zu bilden, wobei es sich bei M um ein Alkalimetall handelt;
(e) das Erhalten einer zweiten elektrolytischen Zelle (15), die eine zweite Alkaliionen-leitfähige Keramikmembran (42) umfasst, die so konfiguriert ist, dass sie selektiv Alkaliionen transportiert, wobei die Keramikmembran (42) eine zweite Anolytkammer (44), die mit einer elektrochemisch aktiven zweiten Anode (48) konfiguriert ist, und eine zweite Katholytkammer (46), die mit einer elektrochemisch aktiven zweiten Kathode (50) konfiguriert ist, voneinander trennt;
(f) das Entfernen der Mischung aus Biodiesel und C₃H₅(OM)₃ aus der ersten Katholytkammer (20) und das Einführen der Mischung in die zweite Anolytkammer (44);
(g) das Einführen von Wasserstoffgas in die zweite Anolytkammer (44);
(h) das Einführen von Wasser in die zweite Katholytkammer (46);
(i) das Anlegen eines elektrischen Stroms an die zweite elektrolytische Zelle (14), wodurch:
i) das Wasserstoffgas in der zweiten Anolytkammer (44) oxidiert wird, so dass Wasserstoffionen gebildet werden, und wodurch die folgende Reaktion erleichtert wird: C₃H₅(OM)₃ + 3H⁺ - C₃H₅(OH)₃ + 3M⁺;
ii) bewirkt wird, dass Alkaliionen (M⁺) von der zweiten Anolytkammer (44) zu der zweiten Katholytkammer (46) durch die Alkaliionen-leitfähige Keramikmembran (42) verlaufen; und
iii) Wasser in Gegenwart von Alkaliionen in der zweiten Katholytkammer (46) zersetzt wird gemäß der folgenden Reaktion: M⁺ + H₂O→ e⁻ MOH + 1/2H₂, und
(j) das Entfernen von Biodiesel und Glycerin (C₃H₅(OH)₃) aus der zweiten Anolytkammer (44).

2. Verfahren zur Erzeugung von Biodiesel nach Anspruch 1, wobei dieses ferner den Schritt des Trennens des Glycerins und des Biodiesels umfasst.

3. Verfahren zur Erzeugung von Biodiesel nach Anspruch 1, wobei der Alkohol einen geradkettigen Niederalkylalkohol C₁ bis C₆ umfasst, der einen oder mehr als einen Hydroxylanteil aufweisen kann.

4. Verfahren zur Erzeugung von Biodiesel nach Anspruch 1, wobei der Alkohol ausgewählt wird aus Methanol, Ethanol, Propanol, Isopropanol, Hexanol, Butanol, Ethylenglycol und Propylenglycol, und wobei es sich bei dem Alkohol vorzugsweise um Methanol handelt.

5. Verfahren zur Erzeugung von Biodiesel nach Anspruch 1, wobei das Triglycerid Pflanzenöl und/oder tierisches Fett umfasst.

6. Verfahren zur Erzeugung von Biodiesel nach Anspruch 1, wobei in der ersten Katholytkammer (20) erzeugtes Wasserstoffgas in die zweite Anolytkammer (44) eingeführt wird.

7. Verfahren zur Erzeugung von Biodiesel nach Anspruch 1, wobei in der zweiten Katholytkammer (46) erzeugtes Wasserstoffgas in die zweite Anolytkammer (44) eingeführt wird.

8. Verfahren zur Erzeugung von Biodiesel nach Anspruch 1, wobei die zweite Anode (48) einen Katalysator umfasst, um die Oxidation von Wasserstoffgas in Wasserstoffionen zu erleichtern.

9. Verfahren zur Erzeugung von Biodiesel nach Anspruch 1, wobei das in der zweiten Katholytkammer (46) erzeugte Alkalihydroxid entfernt und in die erste Anolytkammer (18) eingeführt wird.

10. Verfahren zur Erzeugung von Biodiesel nach Anspruch 1, wobei in der ersten Anolytkammer (18) erzeugtes Wasser entfernt und in die zweite Katholytkammer (46) eingeführt wird.

11. Verfahren zur Erzeugung von Biodiesel nach Anspruch 1, wobei das Triglycerid die allgemeine Formel [C₃H₅O₃][OCR]₃ aufweist, wobei es sich bei R um die Kohlenwasserstoffkette C₁₄ bis C₂₄ handelt.

12. Vorrichtung zur Erzeugung von Biodiesel (10), wobei die Vorrichtung folgendes umfasst:
eine erste elektrolytische Zelle (12), die folgendes umfasst:
eine erste Anolytkammer (18), die eine elektrochemisch aktive erste Anode (22) mit einer Quelle für wässriges Alkalihydroxid aufweist, in dem Hydroxidionen oxidiert werden, um Sauerstoffgas und Wasser zu bilden;
eine zweite Katholytkammer (20), die eine elektrochemisch aktive erste Kathode (24) umfasst, die von der ersten Anolytkammer (18) durch eine erste Alkaliionen-leitfähige Keramikmembran (16) getrennt ist, die so konfiguriert ist, dass sie selektiv Alkaliionen (M⁺) in die erste Katholytkammer (20) transportiert, wobei die erste Katholytkammer (20) eine Quelle für Alkohol und Triglycerid aufweist, wobei der Alkohol in Gegenwart von Alkaliionen reduziert wird, so dass Alkalialkoxid und Wasserstoffgas gebildet werden, und wobei das Alkalialkoxid und das Triglycerid in Reaktion treten, so dass eine Mischung aus Biodiesel und C₃H₅(OM)₃ gebildet wird, wobei es sich bei M um ein Alkalimetall handelt;
eine zweite elektrolytische Zelle (14), die folgendes umfasst:
eine zweite Anolytkammer (44), die eine elektrochemisch aktive zweite Anode (48) mit einer Quelle für Wasserstoffgas und C₃H₅(OM)₃ aufweist, wobei das Wasserstoffgas oxidiert wird, so dass Wasserstoffionen gebildet werden, um dadurch die folgende Reaktion zu erleichtern:
C₃H₅(OM)₃ + 3H⁺ C₃H₅(OH)₃ + 3M⁺;
eine zweite Katholytkammer (46), die eine elektrochemisch aktive zweite Kathode (50) umfasst, die von der zweiten Anolytkammer durch eine zweite Alkaliionen-leitfähige Keramikmembran (42) getrennt ist, die so konfiguriert ist, dass sie selektiv Alkaliionen (M⁺) in die zweite Katholytkammer (46) transportiert, wobei die zweite Katholytkammer (46) eine Wasserquelle aufweist, wobei das Wasser in Gegenwart von Alkaliionen zersetzt wird, so dass Alkalihydroxid und Wasserstoffgas gebildet werden;
einen Fluidpfad zum Transportieren eines Teils des Biodiesels und C₃H₅(OM)₃ aus der ersten Katholytkammer (20) zu der zweiten Anolytkammer (44); und
einen Fluidpfad zum Entfernen von Biodiesel und Glycerin (C₃H₅(OH)₃) aus der zweiten Anolytkammer (44).

13. Vorrichtung zum Erzeugen von Biodiesel (10) nach Anspruch 12, wobei diese ferner einen Absetztank (68) zum Trennen des Glycerins und des Biodiesels umfasst.

14. Vorrichtung zum Erzeugen von Biodiesel (10) nach Anspruch 12, wobei diese ferner einen Fluidpfad zum Transportieren des in der ersten Katholytkammer (20) erzeugten Wasserstoffgases zu der zweiten Anolytkammer (44) umfasst.

15. Vorrichtung zum Erzeugen von Biodiesel (10) nach Anspruch 12, wobei diese ferner einen Fluidpfad zum Transportieren des in der zweiten Katholytkammer (46) erzeugten Wasserstoffgases zu der zweiten Anolytkammer (44) umfasst.

16. Vorrichtung zum Erzeugen von Biodiesel (10) nach Anspruch 12, wobei die zweite Anode (48) ferner einen Katalysator zum Erleichtern der Oxidation von Wasserstoffgas in Wasserstoffione umfasst.

17. Vorrichtung zum Erzeugen von Biodiesel (10) nach Anspruch 12, wobei diese ferner einen Fluidpfad zum Transportieren von in der zweiten Katholytkammer (46) erzeugtem Alkalihydroxid zu der ersten Anolytkammer (18) umfasst.

18. Vorrichtung zum Erzeugen von Biodiesel (10) nach Anspruch 12, wobei diese ferner einen Fluidpfad zum Transportieren von in der ersten Anolytkammer (18) erzeugtem Wasser zu der zweiten Katholytkammer (46) umfasst.

19. Vorrichtung zum Erzeugen von Biodiesel (10) nach Anspruch 12,
wobei es sich bei dem Alkohol um Methanol handelt;
wobei das Triglycerid Pflanzenöl umfasst;
wobei die zweite Anode (48) einen Katalysator umfasst, um die Oxidation von Wasserstoffgas in Wasserstoffionen zu erleichtern;
und wobei die Vorrichtung ferner folgendes umfasst:
einen Absetztank (68) zum Trennen des Glycerins und des Biodiesels;
einen Fluidpfad zum Transportieren des in der ersten Katholytkammer (20) oder in der zweiten Katholytkammer (46) erzeugten Wasserstoffgases zu der zweiten Anolytkammer (44);
einen Fluidpfad zum Transportieren des in der zweiten Katholytkammer (46) erzeugten Alkalihydroxids zu der ersten Anolytkammer (18); und
einen Fluidpfad zum Transportieren von in der ersten Anolytkammer (18) erzeugtem Wasser zu der zweiten Katholytkammer (46).

20. Verfahren zum Umwandeln von Alkalisalzen von Glycerin in Glycerin, wobei das Verfahren folgendes umfasst:
(a) das Erhalten einer elektrolytischen Zelle (14), die eine Alkaliionen-leitfähige Keramikmembran (42) umfasst, die so konfiguriert ist, dass sie selektiv Alkaliionen transportiert, wobei die Keramikmembran (42) eine Anolytkammer (44), die mit einer Anode (48) konfiguriert ist, und eine Katholytkammer (46), die mit einer Kathode (50) konfiguriert ist, voneinander trennt;
(b) das Einführen von C₃H₅(OM)₃ in die Anolytkammer (44);
(c) das Einführen von Wasserstoffgas in die Anolytkammer (44);
(d) das Einführen von Wasser in die Katholytkammer (46);
(e) das Anlegen eines elektrischen Stroms an die elektrolytische Zelle, wodurch:
i) das Wasserstoffgas in der Anolytkammer (44) oxidiert wird, so dass Wasserstoffionen gebildet werden, und wodurch die folgende Reaktion erleichtert wird: C₃H₅(OM)₃ + 3H⁺ → C₃H₅(OH)₃ + 3M⁺;
ii) bewirkt wird, dass Alkaliionen (M⁺) von der Anolytkammer (44) zu der Katholytkammer (46) durch die Alkaliionen-leitfähige Keramikmembran (42) verlaufen; und
iii) Wasser in Gegenwart von Alkaliionen in der Katholytkammer (46) zersetzt wird gemäß der folgenden Reaktion: M⁺ + H₂O → e⁻ MOH + 1/2H₂; und
(j) das Entfernen von Biodiesel und Glycerin (C₃H₅(OH)₃) aus der Anolytkammer (44).

21. Verfahren zum Umwandeln von Alkalisalzen von Glycerin in Glycerin nach Anspruch 20, wobei die Anode (48) einen Katalysator umfasst, um die Oxidation von Wasserstoffgas in Wasserstoffionen zu erleichtern.

## Revendications

1. Procédé de production de biodiesel comprenant :
(a) l'obtention d'une première cellule électrolytique (12) comprenant une première membrane céramique conductrice d'ions alcalins (16) configurée pour transporter sélectivement des ions alcalins, la membrane céramique (16) séparant un premier compartiment d'anolyte (18) configuré avec une première anode active du point de vue électrochimique (22) et un premier compartiment de catholyte (20) configuré avec une première cathode active du point de vue électrochimique (24) ;
(b) l'introduction d'une solution d'hydroxyde alcalin dans le premier compartiment d'anolyte (18) ;
(c) l'introduction d'alcool et d'un triglycéride dans le premier compartiment de catholyte (20) ;
(d) l'application d'un courant électrique à la première cellule électrolytique (12), ce faisant :
i. oxydant des anions hydroxyde dans le premier compartiment d'anolyte (18) pour former de l'oxygène, du gaz et de l'eau ;
ii. provoquant le passage des ions alcalins à travers la membrane céramique conductrice d'ions alcalins (16) du premier compartiment d'anolyte (18) au premier compartiment de catholyte (20) ; et
iii. réduisant l'alcool en présence d'ions alcalins dans le premier compartiment de catholyte (20) pour former un alcoxyde alcalin et de l'hydrogène gazeux ; et
iv. faisant réagir l'alcoxyde alcalin et le triglycéride pour former un mélange de biodiesel et de C₃H₅(OM)₃, dans lequel M est un métal alcalin ;
(e) l'obtention d'une seconde cellule électrolytique (14) comprenant une seconde membrane céramique conductrice d'ions alcalins (42) configurée pour transporter sélectivement des ions alcalins, la membrane céramique (42) séparant un second compartiment d'anolyte (44) configuré avec une seconde anode active du point de vue électrochimique (48) et un second compartiment de catholyte (46) configuré avec une seconde cathode active du point de vue électrochimique (50) ;
(f) le retrait du mélange de biodiesel et de C₃H₅(OM)₃ du premier compartiment de catholyte (20) et l'introduction du mélange dans le second compartiment d'anolyte (44) ;
(g) l'introduction d'hydrogène gazeux dans le second compartiment d'anolyte (44) ;
(h) l'introduction d'eau dans le second compartiment de catholyte (46) ;
(i) l'application d'un courant électrique à la seconde cellule électrolytique (14), ce faisant :
i. oxydant l'hydrogène gazeux dans le second compartiment d'anolyte (44) pour former des ions hydrogène et faciliter de ce fait la réaction suivante : C₃H₅(OM)₃ + 3H⁺ -> C₃H₅(OH)₃ + 3M+ ;
ii. provoquant le passage des ions alcalins (M⁺) à travers la membrane céramique conductrice d'ions alcalins (42) du second compartiment d'anolyte (44) au second compartiment de catholyte (46) ; et
iii. décomposant l'eau en présence d'ions alcalins dans le second compartiment de catholyte (46) selon la réaction suivante : M⁺ + H₂O -> e⁻ MOH + ½H₂ ; et
(j) le retrait du biodiesel et de glycérine (C₃H₅(OH)₃) du second compartiment d'anolyte (44).

2. Procédé de production de biodiesel selon la revendication 1, comprenant en outre l'étape de séparation de la glycérine et du biodiesel.

3. Procédé de production de biodiesel selon la revendication 1, dans lequel l'alcool comprend un alcool alkylique inférieur à chaîne droite, C₁ à C₆, qui peut contenir plus d'un fragment hydroxyle.

4. Procédé de production de biodiesel selon la revendication 1, dans lequel l'alcool est sélectionné parmi le méthanol, l'éthanol, le propanol, l'isopropanol, l'hexanol, le butanol, l'éthylèneglycol et le propylèneglycol, et l'alcool est de préférence le méthanol.

5. Procédé de production de biodiesel selon la revendication 1, dans lequel le triglycéride comprend de l'huile végétale et/ou de la graisse animale.

6. Procédé de production de biodiesel selon la revendication 1, dans lequel l'hydrogène gazeux produit dans le premier compartiment de catholyte (20) est introduit dans le second compartiment d'anolyte (44).

7. Procédé de production de biodiesel selon la revendication 1, dans lequel l'hydrogène gazeux produit dans le second compartiment de catholyte (46) est introduit dans le second compartiment d'anolyte (44).

8. Procédé de production de biodiesel selon la revendication 1, dans lequel la seconde anode (48) comprend un catalyseur pour faciliter l'oxydation d'hydrogène gazeux en ions hydrogène.

9. Procédé de production de biodiesel selon la revendication 1, dans lequel l'hydroxyde alcalin produit dans le second compartiment de catholyte (46) est retiré et introduit dans le premier compartiment d'anolyte (18).

10. Procédé de production de biodiesel selon la revendication 1, dans lequel l'eau produite dans le premier compartiment d'anolyte (18) est retirée et introduite dans le second compartiment de catholyte (46).

11. Procédé de production de biodiesel selon la revendication 1, dans lequel le triglycéride a la formule générale [C₃H₅O₃][OCR]₃, où R est une chaîne d'hydrocarbure en C₁₄ à C₂₄.

12. Appareil de production de biodiesel (10) comprenant :
une première cellule électrolytique (12) comprenant :
un premier compartiment d'anolyte (18) comprenant une première anode active du point de vue électrochimique (22) ayant une source d'hydroxyde alcalin aqueux dans laquelle des ions hydroxyde sont oxydés pour former de l'oxygène gazeux et de l'eau ;
un premier compartiment de catholyte (20) comprenant une première cathode active du point de vue électrochimique (24) séparé du premier compartiment d'anolyte (18) par une première membrane céramique conductrice d'ions alcalins (16) configurée pour transporter sélectivement des ions alcalins (M⁺) dans le premier compartiment de catholyte (20), dans lequel le premier compartiment de catholyte (20) a une source d'alcool et d'un triglycéride dans laquelle l'alcool est réduit en présence d'ions alcalins pour former un alcoxyde alcalin et de l'hydrogène gazeux, et dans lequel l'alcoxyde alcalin et le triglycéride réagissent pour former un mélange de biodiesel et de C₃H₅(OM)₃, dans lequel M est un métal alcalin ;
une seconde cellule électrolytique (14) comprenant :
un second compartiment d'anolyte (44) comprenant une seconde anode active du point de vue électrochimique (48) ayant une source d'hydrogène gazeux et de C₃H₅(OM)₃ dans laquelle l'hydrogène gazeux est oxydé pour former des ions hydrogène afin de faciliter de ce fait la réaction suivante : C₃H₅(OM)₃ + 3H⁺ → C₃H₅(OH)₃ + 3M⁺ ;
un second compartiment de catholyte (46) comprenant une seconde cathode active du point de vue électrochimique (50) séparé du second compartiment d'anolyte par une seconde membrane céramique conductrice d'ions alcalins (42) configurée pour transporter sélectivement des ions alcalins (M⁺) dans le second compartiment de catholyte (46), dans lequel le second compartiment de catholyte (46) a une source d'eau dans laquelle l'eau est décomposée en présence d'ions alcalins pour former l'hydroxyde alcalin et de l'hydrogène gazeux ;
un chemin fluidique pour transporter une portion du biodiesel et de C₃H₅(OM)₃ du premier compartiment de catholyte (20) au second compartiment d'anolyte (44) ; et
un chemin fluidique pour retirer biodiesel et glycérine (C₃H₅(OH)₃) du second compartiment d'anolyte (44).

13. Appareil de production de biodiesel (10) selon la revendication 12, comprenant en outre un décanteur (68) pour séparer la glycérine et le biodiesel.

14. Appareil de production de biodiesel (10) selon la revendication 12, comprenant en outre un chemin fluidique pour transporter l'hydrogène gazeux produit dans le premier compartiment de catholyte (20) au second compartiment d'anolyte (44).

15. Appareil de production de biodiesel (10) selon la revendication 12, comprenant en outre un chemin fluidique pour transporter l'hydrogène gazeux produit dans le second compartiment de catholyte (46) au second compartiment d'anolyte (44).

16. Appareil de production de biodiesel (10) selon la revendication 12, dans lequel la seconde anode (48) comprend en outre un catalyseur pour faciliter l'oxydation d'hydrogène gazeux en ions hydrogène.

17. Appareil de production de biodiesel (10) selon la revendication 12, comprenant en outre un chemin fluidique pour transporter l'hydroxyde alcalin produit dans le second compartiment de catholyte (46) au premier compartiment d'anolyte (18).

18. Appareil de production de biodiesel (10) selon la revendication 12, comprenant en outre un chemin fluidique pour transporter l'eau produite dans le premier compartiment d'anolyte (18) au second compartiment de catholyte (46).

19. Appareil de production de biodiesel (10) selon la revendication 12 :
dans lequel l'alcool est du méthanol ;
dans lequel le triglycéride comprend de l'huile végétale ;
dans lequel la seconde anode (48) comprend un catalyseur pour faciliter l'oxydation d'hydrogène gazeux en ions hydrogène ;
et dans lequel l'appareil comprend en outre :
un décanteur (68) pour séparer la glycérine et le biodiesel ;
un chemin fluidique pour transporter l'hydrogène gazeux produit dans le premier compartiment de catholyte (20) ou le second compartiment de catholyte (46) au second compartiment d'anolyte (44) ;
un chemin fluidique pour transporter l'hydroxyde alcalin produit dans le second compartiment de catholyte (46) au premier compartiment d'anolyte (18) ; et
un chemin fluidique pour transporter l'eau produite dans le premier compartiment d'anolyte (18) au second compartiment de catholyte (46).

20. Procédé de conversion de sels alcalins de glycérine en glycérine comprenant :
(a) l'obtention d'une cellule électrolytique (14) comprenant une membrane céramique conductrice d'ions alcalins (42) configurée pour transporter sélectivement des ions alcalins, la membrane céramique (42) séparant un compartiment d'anolyte (44) configuré avec une anode (48) et un compartiment de catholyte (46) configuré avec une cathode (50) ;
(b) l'introduction de C₃H₅(OM)₃ dans le compartiment d'anolyte (44) ;
(c) l'introduction d'hydrogène gazeux dans le compartiment d'anolyte (44) ;
(d) l'introduction d'eau dans le compartiment de catholyte (46) ;
(e) l'application d'un courant électrique à la cellule électrolytique, ce faisant :
i. oxydant l'hydrogène gazeux dans le compartiment d'anolyte (44) pour former des ions hydrogène et faciliter de ce fait la réaction suivante : C₃H₅(OM)₃ + 3H⁺ → C₃H₅(OH)₃ + 3M+ ;
ii. provoquant le passage des ions alcalins (M⁺) à travers la membrane céramique conductrice d'ions alcalins (42) du compartiment d'anolyte (44) au compartiment de catholyte (46) ; et
iii. décomposant l'eau en présence d'ions alcalins dans le compartiment de catholyte (46) selon la réaction suivante : M⁺ + H₂O -> e⁻ MOH + ½H₂ ; et
(f) le retrait de glycérine (C₃H₅(OH)₃) du compartiment d'anolyte (44).

21. Procédé de conversion de sels alcalins de glycérine en glycérine selon la revendication 20, dans lequel l'anode (48) comprend un catalyseur pour faciliter l'oxydation d'hydrogène gazeux en ions hydrogène.
